# EUROPEAN PATENT SPECIFICATION

(11) **EP 4 075 124 B1**
(45) Date of publication and mention of the grant of the patent: **18.03.2026**
(21) Application number: 20899524.1
(22) Date of filing: 15.09.2020
(51) Int. Cl.: G01V 5/226, G01T 1/29, G01N 23/046

(54) **ADJUSTMENT AND POSITIONING DEVICE AND METHOD FOR RAY SOURCE ASSEMBLY, AND RADIATION SCAN IMAGING APPARATUS**
EINSTELL- UND POSITIONIERUNGSVORRICHTUNG UND -VERFAHREN FÜR EINE STRAHLENQUELLENANORDNUNG UND STRAHLUNGSABTASTBILDGEBUNGSVORRICHTUNG
DISPOSITIF ET PROCÉDÉ DE RÉGLAGE ET DE POSITIONNEMENT POUR ENSEMBLE SOURCE DE RAYONS, ET APPAREIL IMAGEUR À BALAYAGE DE RAYONNEMENT

(30) Priority: 11.12.2019 CN 201911272103
(43) Date of publication of application: 19.10.2022
(73) Proprietor: Nuctech Company Limited, TongFang Building Shuangqinglu Haidian District Beijing 100084 (CN)
(72) Inventor: ZHOU, Yong, Beijing 100084 (CN); TENG, Yanwei, Beijing 100084 (CN); ZHANG, Li, Beijing 100084 (CN); HUANG, Qingping, Beijing 100084 (CN); FANG, Fei, Beijing 100084 (CN); DING, Hui, Beijing 100084 (CN)
(74) Representative: Gunzelmann, Rainer
(86) International application number: PCT/CN2020/115321
(87) International publication number: WO 2021/114791

(56) References cited:
- CN-A- 102 772 221
- CN-A- 104 535 593
- CN-A- 104 597 062
- CN-A- 104 939 860
- CN-A- 104 939 862
- CN-A- 105 954 304
- CN-A- 106 963 408
- CN-U- 202 599 874
- CN-U- 202 751 407
- CN-U- 208 420 757
- US-A1- 2015 115 143
- US-B1- 6 485 176

## Description

### TECHNICAL FIELD

Embodiments of the present invention generally relates to a field of radiation detection, and in particular, to a device and a method for adjusting and positioning capable of realizing a translation and a rotation of a ray source assembly, and a radiation scan imaging apparatus including the device for adjusting and positioning.

### BACKGROUND

A radiation ray such as an X-ray has a wide range of application in fields of industrial non-destructive detection, safety inspection, medical diagnosis and treatment, etc., for example, CT imaging and security inspection, in which a radiation ray emitted by a ray source assembly scans an object or a human body to be inspected in a scan channel. In the existing radiation security inspection systems, the device for fixing the ray source assembly is complicated in structure, the device is not easily adjusted, and is poor in adjustment accuracy, which affects the imaging quality.

US 2015/115143 A1 discloses a tomographic scanning apparatus for performing scanning in various modes by various motion mechanisms, so as to augment the flexibility of the application of tomographic scanning apparatuses and cut the costs incurred in modifying and/or redesigning the mechanisms of tomographic scanning apparatuses. The apparatus includes a rotating mechanism RS connected to radial and tangential moving mechanisms through a height adjustment mechanism.

CN 106 963 408 A discloses a double detector CT imaging device that can use different detectors according to the required resolution.

CN 105 954 304 A discloses a turntable for a CT scanning device that uses a Z-axis table as a cantilever to fix and position the rotating object table and the scanning table.

### SUMMARY

The present disclosure is provided in order to overcome at least one of the above and other problems and defects in the prior art.

According to the present invention, a device for adjusting and positioning is set forth in claim 1.

In some embodiments, the base comprises an upper plate as the second component and a lower plate as the first component, the upper plate and the lower plate are stacked on each other in a vertical direction, such that the ray source assembly is positioned on an upper surface of the upper plate, and the upper plate and the lower plate are connected together in a manner that they are movable relative to each other.

In some embodiments, an upright shaft is provided on an upper surface of the lower plate facing the upper plate, a through hole is provided at a position of the upper plate corresponding to the shaft, the shaft passes through the through hole and extends upwardly so as to engage with a corresponding shaft hole of the ray source assembly, such that the ray source assembly and the upper plate are capable of rotating around the shaft under a driving of the second adjustment mechanism.

In some embodiments, the shaft is positioned such that an axis of the shaft substantially coincides with a vertical axis of the ray source assembly.

In some embodiments, a positioning pin is provided on an upper surface of the upper plate facing away from the lower plate, the positioning is being engaged with a corresponding pin hole of the ray source assembly, so as to position the ray source assembly by preventing the ray source assembly from moving relative to the upper plate in a plane perpendicular to the vertical direction.

In some embodiments, the first adjustment mechanism comprises: a first holder configured to be fixed to the apparatus frame; and a first adjustment bolt threadedly engaged with the first holder and connected to the first component, such that a rotation of the first adjustment bolt relative to the first holder drives the first component to translate, so as to drive the second component connected with the first component and the ray source assembly positioned on the second component to translate relative to the apparatus frame along the first direction.

In some embodiments, an elongated first hole is provided on the first component, the elongated first hole penetrates the first component and extends in the first direction; and the device for adjusting and positioning further comprises a first fastener inserted into the first hole and tightened so as to mount the first component to the apparatus frame, and the first fastener is configured to be releasable during a translation movement so as to allow the first component to translate relative to the apparatus frame in a manner that an inner wall of the first hole abuts against the first fastener.

In some embodiments, the device for adjusting and positioning further comprises a translation guide member configured to be fixed to the apparatus frame and configured to guide the base to translate.

In some embodiments, the second adjustment mechanism comprises: a second holder configured to be fixed to the apparatus frame; and a second adjustment bolt threadedly engaged with the second holder and connected to the second component, such that a rotation of the second adjustment bolt relative to the second holder drives the second component to rotate, so as to drive the ray source assembly positioned on the second component to rotate.

In some embodiments, the second adjustment bolt is arranged such that a rotation of the second adjustment bolt relative to the second seat applies to the second component a force tangent to a circumferential direction of the rotation of the second component.

According to the present invention, a second hole is provided on the first component; an elongated third hole is provided on the second component, the elongated third hole penetrates the second component and extends in a direction at an angle to the first direction; the device for adjusting and positioning further comprises a second fastener inserted into and passing through the third hole and engaged with the second hole so as to fasten the second component to the first component, and configured to be releasable during the rotation so as to allow the second component to rotate in a manner that an inner wall of the third hole abuts against the second fastener.

In some embodiments, the elongated third hole extends in a direction tangent to as circumferential direction of the rotation of the second component.

In some embodiments, the first adjustment mechanism further comprises: a third holder fixed to the first component and connected with the first adjustment bolt.

In some embodiments, the second adjustment mechanism further comprises: a fourth holder (330) fixed to the second component and connected with the second adjustment bolt.

According to another aspect of the present invention, a radiation scan imaging apparatus according to claim 13 is provided, including a ray source assembly and the device for adjusting and positioning according to any embodiment of the present disclosure, wherein the ray source assembly is supported on the device for adjusting and positioning, such that an orientation of the ray source assembly is adjusted by the device for adjusting and positioning.

According to yet another aspect of the present invention, a method for adjusting an orientation of a ray source assembly of a radiation scan imaging apparatus according to claim 14 is provided.

In some embodiments, the translation adjustment step comprises: driving the upper plate and the lower plate to move together relative to the apparatus frame through the first adjustment mechanism, so as to drive the ray source assembly to translate in the first direction; and the rotation adjustment step comprises: driving the upper plate to rotate relative to the lower plate through the second adjustment mechanism, so as to drive the ray source assembly to rotate.

In some embodiments, the rotation adjustment step further comprises: driving the upper plate and the ray source assembly to rotate about the shaft through the second adjustment mechanism.

In some embodiments, the translation adjustment step comprises: rotating the first adjustment bolt relative to the first holder to drive the first component to translate, so as to drive the second component connected with the first component and the ray source assembly positioned on the second component to translate relative to the apparatus frame along the first direction.

In some embodiments, the translation adjustment step further comprises: releasing the first fastener and driving the first component to translate relative to the apparatus frame through the first adjustment mechanism in a manner that an inner wall of the first hole abuts against the first fastener.

In some embodiments, the rotation adjustment step comprises: rotating the second adjustment bolt relative to the second holder to drive the second component to rotate, so as to drive the ray source assembly positioned on the second component to rotate.

In some embodiments, the rotation adjustment step comprises: applying a force to the second component in a direction tangent to a circumferential direction of a rotation of the second component through a rotation of the second adjustment bolt relative to the second holder.

The rotation adjustment step comprises: releasing the second fastener to allow the second component to rotate under a driving of the second adjustment mechanism in a manner that an inner wall of the third hole abuts against the second fastener.

Other objects and advantages of the present disclosure will be apparent from the following detailed descriptions of the present disclosure with reference to the accompanying drawings, and may facilitate a comprehensive understanding of the present disclosure.

### BRIEF DESCRIPTION OF THE DRAWINGS

Features and advantages of the present disclosure may be more clearly understood with reference to the accompanying drawings. The accompanying drawings are schematic and should not be construed as limiting the present disclosure in any way, in which:
FIG. 1 shows a side perspective view of a structure of a part of a radiation scan imaging apparatus according to an exemplary embodiment of the present disclosure;
FIG. 2 shows a top perspective view of a structure of a device for adjusting and positioning a ray source assembly according to an exemplary embodiment of the present disclosure;
FIG. 3A shows a top perspective view of a structure of an upper plate of a device for adjusting and positioning a ray source assembly according to an exemplary embodiment of the present disclosure;
FIG. 3B shows a top perspective view of a structure of an upper plate of a device for adjusting and positioning a ray source assembly according to another exemplary embodiment of the present disclosure;
FIG. 4 shows a top perspective view of a structure of a lower plate of a device for adjusting and positioning a ray source assembly according to an exemplary embodiment of the present disclosure; and
FIG. 5 shows a flowchart of a method for adjusting an orientation of a ray source assembly of a radiation scan imaging apparatus according to an exemplary embodiment of the present disclosure.

### DETAILED DESCRIPTION OF EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure within the scope of the present invention as defined by the appended claims.

Additionally, in the detailed descriptions below, for ease of explanation, numerous specific details are set forth in order to provide a comprehensive understanding of the embodiments of the present disclosure. Obviously, however, within the scope of the present invention as defined by the appended claim, one or more embodiments may also be implemented without these specific details. In other conditions, commonly known structures and devices are illustratively represented to simplify the drawings.

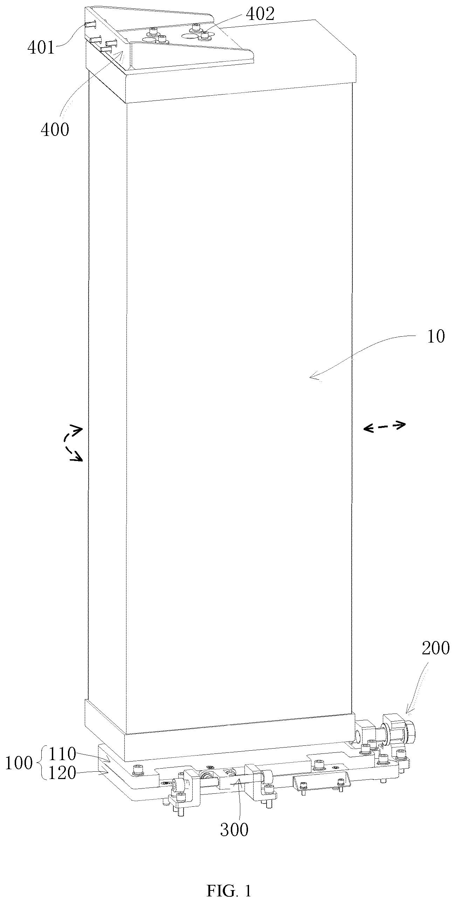

FIG. 1 schematically shows a radiation scan imaging apparatus according to an exemplary embodiment of the present disclosure. The exemplary radiation scan imaging apparatus may be a component of a security inspection system, such as a CT imaging apparatus. The radiation scan imaging apparatus includes a radiation device for generating a radiation scan beam, such as a ray source assembly 10 for generating a ray beam, which may include a ray source or a radiation source such as an X-ray machine, an isotope ray source, etc. In the illustrated embodiment, the ray source assembly 10 has a cylindrical profile, such as a substantial cuboid. However, the present disclosure is not limited to this, and it may also take any suitable form such as a cylinder as actually required.

The radiation scan imaging apparatus further includes an adjusting and positioning device configured to adjust an orientation of the ray source assembly 10 so as to adjust a target point position of a ray source and improve an imaging quality. As shown in FIG. 1, the adjusting and positioning device includes a base 100 for supporting the ray source assembly 10, such that the ray source assembly 10 is substantially vertically positioned and held on the base 100. In the embodiment of the present disclosure, the base 100 includes a first component and a second component. As described below, the first component and the second component are connected to each other in a manner that they are movable relative to each other, for example, the second component may, for example, rotate relative to the first component, or the first component and the second component may move together or integrally in a translational direction (also referred to as a first direction). In some examples, the ray source assembly is substantially vertically positioned on the second component.

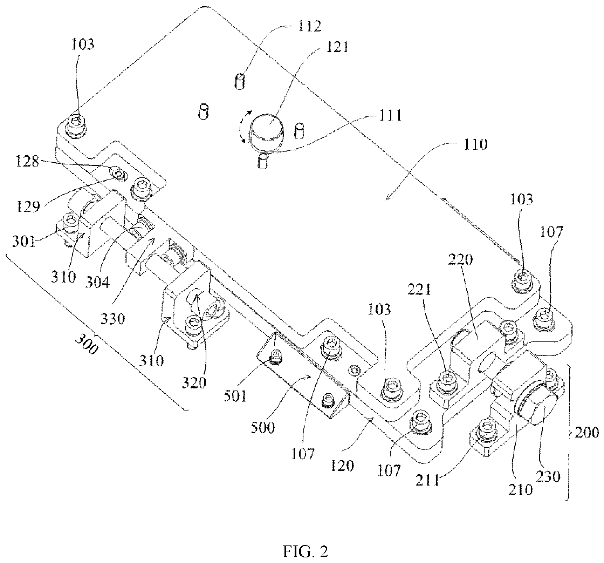

The adjusting and positioning device further includes an adjustment mechanism configured to drive the base to drive, thereby driving the ray source assembly supported and held on the base to perform an appropriate movement, such as rotation and translation, so as to adjust an orientation of the ray source assembly, such that a target point position of the ray source may be adjusted. As shown in FIGS. 1 and 2, the adjusting and positioning device includes a first adjustment mechanism 200 and a second adjustment mechanism 300, which are respectively configured to drive the base and thereby driving the ray source assembly to perform a movement of different forms, such as rotation, translation, etc. In some embodiments, the adjusting and positioning device provided in the present disclosure may implement an independent adjustment of the translation and the rotation of the ray source assembly.

The first adjustment mechanism 200 drives the ray source assembly 10 to perform a translational movement in the first direction (as shown by a bidirectional dashed straight arrow in FIG. 1) by driving an entire base or a part of the base to move relative to an apparatus frame, so as to adjust a position of the ray source assembly. As an example, the first adjustment mechanism may be mounted to the first component of the base and to the apparatus frame (not shown) of the radiation scan imaging apparatus. The first adjustment mechanism drives the first component to move, so as to drive the base or other parts of the base (e.g., the second component connected with the first component) to move, thereby driving the ray source assembly positioned on the base to perform a translation relative to the apparatus frame.

The second adjustment mechanism 300 is configured to drive the base 100 or a part of the base to move so as to drive the ray source assembly 10 to rotate (as shown by the bidirectional dashed arc arrow in FIG. 1) to adjust a beam emitting direction of the ray source assembly 10. A rotation angle range of the ray source assembly may be set as actually required. In some examples, an adjustment of the rotation of the ray source assembly is a fine adjustment whose rotation angle is small, with a range of ±5°, ±3°, and ±1°, for example. Exemplarily, the second adjustment mechanism may be mounted to the second component of the base and the apparatus frame, and may drive the ray source assembly to rotate by driving the second component to move (for example, rotate relative to the first component).

Additionally, in order to realize the positioning of the ray source assembly, in addition to the base 100, the adjusting and positioning device may further include a top bracket 400, as shown in FIG. 1. The top bracket 400 is mounted to the apparatus frame and may be connected to the ray source assembly 10, such as a top or a side of the ray source assembly 10. Exemplarily, the top bracket 400 is movably (e.g., horizontally translatable) mounted to the apparatus frame through a pin shaft 401, and the top bracket 400 is connected to the ray source assembly 10 in a manner that the ray source assembly 10 is allowed to move (e.g., rotate). Such a connection is realized by means of, for example, a cooperation of a shaft 402 with a corresponding hole. Therefore, the top bracket cooperates with the base to hold the ray source assembly therebetween to prevent a vertical movement of the ray source assembly, but allow a movement (e.g., a rotation, a horizontal translation) of the ray source assembly relative to the apparatus frame.

The base may take various forms or structures to cooperate with the adjustment mechanism. Based on a drive of the adjustment mechanism, the ray source assembly supported on it is driven to move, so as to realize an adjustment of the target point position of the ray source, ensure the accuracy of the target point position, and improve the imaging quality. In the illustrated embodiment, the base 100 includes a first component and a second component in a form of a generally flat plate, respectively, and the first component and the second component are separate pieces. Referring to FIG. 1-FIG. 4, the base 100 includes an upper plate 110 as the second component and a lower plate 120 as the first component, and the upper plate 110 and the lower plate 120 are stacked on each other in the vertical direction and connected to each other in a manner that they are moveable (e.g., rotatable) relative to each other. Additionally, as described below, the upper plate 110 and the lower plate 120 may also be moved together or integrally in a translation direction, for example, the lower plate drives the upper plate to translate together. The ray source assembly 10 is positioned on an upper surface of the upper plate 110.

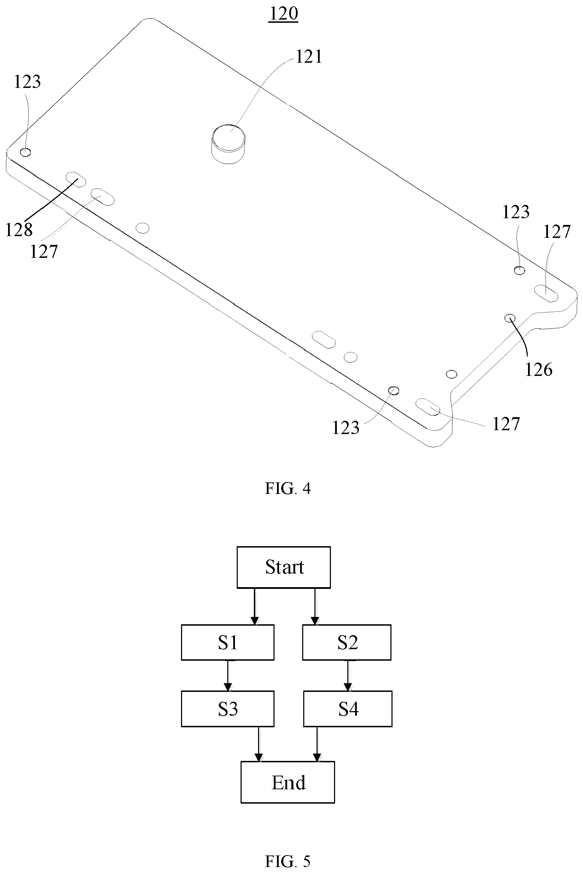

As shown in FIG. 2 and FIG. 4, a shaft 121 is provided on an upper surface of the lower plate 120 facing the upper plate 110, which is, for example, upright. A through hole 111 is provided at a position of the upper plate 110 corresponding to the shaft 121, and the shaft 121 passes through the through hole 111 and extends upward to engage with a corresponding shaft hole of the ray source assembly 10 (e.g., a shaft hole located at a bottom of the ray source assembly), such that the upper plate 110 and the ray source assembly 10 positioned thereon may rotate around the shaft 121 under a driving of the adjustment mechanism 300 to realize the rotation adjustment. In some examples, the shaft 121 is positioned such that an axis of the shaft substantially coincides with a vertical axis of the ray source assembly 10, thereby a smoother rotation may be realized.

In order to realize the positioning of the ray source assembly 10 on the base 100, a positioning pin 112 is provided on the upper surface of the upper plate 110 facing away from the lower plate 120, and the positioning pin 112 is engaged with a corresponding pin hole of the ray source assembly 10 (e.g., a pin hole at the bottom of the ray source assembly), such that the ray source assembly 10 is positioned relative to the upper plate 110, so as to prevent the ray source assembly 10 from moving relative to the upper plate 110 in a plane perpendicular to the vertical direction, thereby a movement of the upper plate 110 may drive the ray source assembly 10 to move together. Exemplarily, a plurality of positioning pins 112 may be provided around the shaft 121. Additionally, the plurality of positioning pins 112 may be irregularly arranged to ensure that the ray source assembly 10 is not wrongly oriented. It may be understood that a positioning manner of the ray source assembly relative to the base is not limited to this, and any suitable detachable or non-detachable fixing or positioning manner, such as a clamp, etc., may also be adopted as required.

In some embodiments, as shown in FIG. 2 and FIG. 4, a first hole 127 is provided on the lower plate 120, and the first hole 127 penetrates the lower plate 120 in a thickness direction (e.g., a vertical direction) of the lower plate. The first hole 127 is, for example, an elongated hole extending substantially along the translation direction. In order to position the lower plate 120 relative to the apparatus frame, the adjusting and positioning device further includes a first fastener 107, and the first fastener is inserted into the first hole 121 and screwed to the apparatus frame, so as to mount the lower plate 120 to the apparatus frame. For example, the lower plate is detachably fixed to the apparatus frame. The first fastener 107, for example, in a form of a bolt (e.g., a single-ended bolt or a combination of a bolt and a nut), may be tightened to press the lower plate against the apparatus frame. The first fastener 107 may be released during the translational movement described above, but is still fixed to the apparatus frame and inserted into the first hole 127, so as to allow the lower plate 120 to translate relative to the apparatus frame with an inner wall of the first hole 127 abutting the first fastener 107. Thus, during such translational movement, the first fastener remains fixed relative to the apparatus frame, and a cooperation of the first fastener with the elongated first hole may guide the lower plate to translate relative to the apparatus frame. After the base and the ray source assembly supported thereon are translated to a suitable position, the first fastener is tightened again, so as to fixedly press the lower plate against the apparatus frame or fixedly position the lower plate relative to the apparatus frame, thereby avoiding a necessary movement of the ray source assembly during operation.

In addition that the cooperation of the first fastener with the elongated first hole may guide the translation of the lower plate relative to the apparatus frame, in some embodiments, as shown in FIG. 2 and FIG. 4, an additional elongated hole 128 may also be provided on the lower plate 120, the additional elongated hole 128 extends along the above translation direction, and a positioning member 129 partially positioned in the elongated hole 128 is fixed to the apparatus frame, such that a cooperation of the elongated hole 128 with the positioning member 129 may also guide such a translation movement, and it may also ensure a correct positioning or mounting of the lower plate.

As shown in FIG. 1 and FIG. 2, the upper plate 110 and the lower plate 120 are configured or arranged such that the first fastener 107 is exposed, so as to facilitate mounting and detaching, while facilitating adjustment during the translation. For example, some of the first fasteners 107 and the first holes 127 are arranged at exposed corners of the lower plate 110, and some other fasteners 107 are exposed through notches 117 in the upper plate 110.

As shown in FIG. 1 and FIG. 2, the adjusting and positioning device may further include a translation guide member 500, which may be fixed to the apparatus frame for guiding the translation movement of the base. For example, the translation guide member 500 may be in a form of a wedge-shaped holder or plate, one side of which, for example, abuts against a side face of the lower plate 120 extending parallel to the translation direction, thereby avoiding wobbling or deflection of the lower plate and the base during the translation. Exemplarily, translation guide members may be respectively provided on two opposite sides of the lower plate, so as to guide such translation movement more stably.

The above connection of the upper plate and the lower plate is realized in the following manner. As shown in FIG. 2-FIG. 4, a second hole 123 is provided on the lower plate 120, a third hole 113 is provided at a position of the upper plate 110 corresponding to the second hole 123, and the third hole 113 penetrates the upper plate 110 in the thickness direction (or the vertical direction). The third hole 113 is elongated, and is angled or inclined relative to the translation direction. The adjusting and positioning device further includes a second fastener 103 inserted into and passing through the third hole 113 to be engaged with the second hole 123, so as to fasten the upper plate 110 to the lower plate 120, such that the lower plate 120 may drive the upper plate 110 to translate together during the translational movement.

The second fastener 103 includes, for example, a bolt (such as a single-ended bolt or a combination of a bolt and a nut), the second hole 123 may be a threaded hole, and the third hole 113 may be an elongated hole having a smooth inner wall or having no thread. For example, a width of the third hole may be equal to or slightly larger than a diameter of the second fastener, such that the second fastener may move or slide within the third hole. Thus, during a rotation, the second fastener 103 may be released, that is, a fixing of the upper plate 110 relative to the lower plate 120 is released, while the second fastener 103 is still inserted into the third hole 113 and remains engaged with the second hole 123, so as to be fixed relative to the lower plate, such that the upper plate 110 is allowed to rotate relative to the lower plate 120 within an angle range under a driving of the adjustment mechanism. For example, the upper plate rotates around the shaft 121 fixed to the lower plate 120 in a manner that the inner wall of the third hole 113 abuts against the second fastener 103, thereby further driving the ray source assembly 10 positioned on the upper plate 110 to rotate by an appropriate angle, so as to realize the rotation adjustment. After the rotation adjustment is completed, the second fastener 103 is fastened again, such that the upper plate 110 is fixed relative to the lower plate 120 to ensure that the ray source assembly 10 positioned on the upper plate 110 does not rotate during the operation.

The elongate third hole 113 extends in a direction tangent to a circumferential direction of a rotation of the upper plate 110 around the shaft 120, such that a cooperation of the third hole 113 with the second fastener 103 may guide the rotation of the upper plate. Exemplarily, a plurality of third holes may be provided at a plurality of corners of the upper plate, and extension directions of each third hole may be different from one another, but are all approximately tangent to the circumferential direction along which the upper plate rotates, which is beneficial for guiding the upper plate.

In the embodiment shown in FIG. 1 and FIG. 2, the first adjustment mechanism 200 includes a first holder 210 and a first adjustment bolt 230. The first holder 210 is used to be mounted to the apparatus frame, for example, by means of a bolt 211, and the first adjustment bolt 230 is connected to a part of the base, such as the first component or the lower plate 120, and is threadedly engaged with the first holder 210. Thus, as the first holder 210 remains unmoved, a rotation of the first adjustment bolt 230 relative to the first holder 210 may drive the lower plate 120 to translate, and a translation direction coincides with an axial direction of the first adjustment bolt 230, thereby further driving the upper plate 110 connected to the lower plate 120 and the ray source assembly 10 positioned on the upper plate 110 to translate relative to the apparatus frame along the translation direction. By properly designing a thread pitch, such threaded rotation may realize a fine translation adjustment of the ray source assembly.

The first adjustment bolt may be directly connected to the lower plate or, as shown in FIG. 1 and FIG. 2, connected to the lower plate by another holder 220 connected to the lower plate 120. The holder 220 is detachably fixed to the lower plate 120, for example, by a bolt 221 threadedly engaged with a hole 126 in the lower plate.

As shown in FIG.1 and FIG. 2, the second adjustment mechanism 300 includes a second holder 310 and a second adjustment bolt 320. The second holder 310 is used to be mounted to the apparatus frame, for example, detachably fixed to the apparatus frame by means of a bolt 301, the second adjustment bolt 320 is connected to the upper plate 110 and threadedly engaged with the second holder 310, such that a rotation of the second adjustment bolt 320 relative to the second seat 310 drives the upper plate 110 to rotate, so as to drive the ray source assembly 10 positioned on the upper plate 110 to rotate around the shaft 121. By properly designing a thread pitch, such threaded rotation may realize a fine rotation adjustment of the ray source assembly.

Exemplarily, an axial direction of the second adjustment bolt 320 may coincide with a tangent direction of a circumferential direction along which the upper plate 110 rotates at a position where the second adjustment bolt is (directly or indirectly) connected with the upper plate, or is slightly inclined relative to the tangent direction, such that the rotation of the second adjustment bolt may apply a tangent force for causing the upper plate to rotate, that is, the rotation of the second adjustment bolt relative to the second holder applies to the upper plate a force tangent to the circumferential direction of the rotation around the shaft. In some examples, the axial direction of the second adjustment bolt may substantially coincide with the direction along which the lower plate translates.

The second adjustment bolt may be directly connected to the upper plate, for example, to a protruding portion (not shown) of the upper plate, or connected to the upper plate 110 by another holder 330 mounted to the upper plate 110, as shown in FIG. 1 and FIG. 2. A holder 330 is detachably fixed to the upper plate 110, for example, by a bolt 304 engaged with a hole 114 in a side face of the upper plate 110. For example, by pressing the holder 330 firmly against the side face of the upper plate 110 by using the bolt 304 or a head thereof or a nut. The holder 330 may be connected with the second adjustment bolt 320 together or integrally. Two spaced apart second holders 310 may be included, and the second adjustment bolt 320 is threadedly engaged with the two second holders 310, so as to be rotatable relative to the second holders 310. The holder 330 or the protruding portion of the upper plate may be located between the two second holders 310.

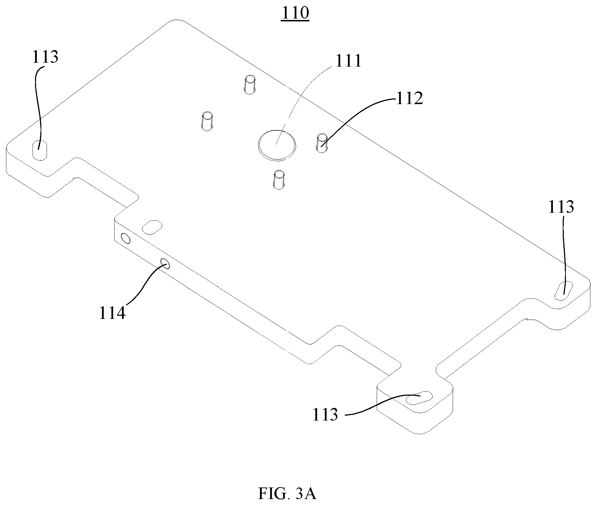

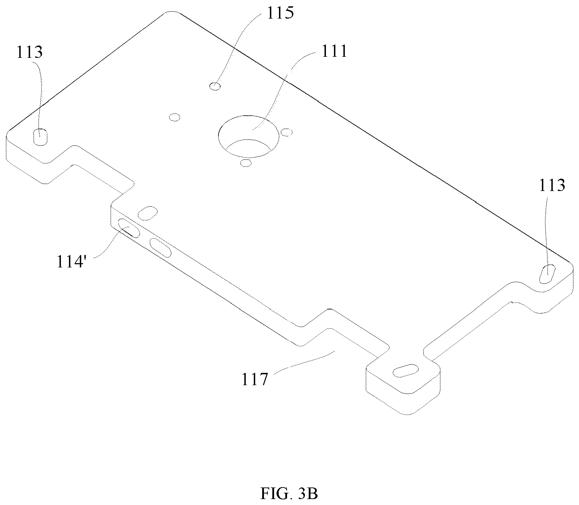

During the above translation movement, the second adjustment bolt 320 of the second adjustment mechanism 300 may be rotated while the first adjustment bolt 230 of the first adjustment mechanism 200 is rotated, such that the upper plate 110 and the lower plate 120 may translate together. Alternatively, the connection of the second adjustment mechanism with the upper plate may also be detached, for example, the connection of the second adjustment bolt with the upper plate is detached, and the translation of the lower plate is used to drive the upper plate to translate together. In the embodiment of FIG. 3B, a hole 114' in the side face of the upper plate 110 is in elongated, and substantially extends in the above translation direction, such that during the translation, the bolt 304 may move or slide within the hole 114' by slightly releasing the bolt 304, i.e., releasing the pressing of the holder 330 against the side face of the upper plate 110 by the bolt 304. Thereby, the upper plate 110 may translate relative to the holder 330 and thus relative to the second adjustment mechanism 300 under the driving of the lower plate 120.

In another example, a connection structure between the second adjustment bolt and the upper plate (or the holder 330 connected to the upper plate) may also be reasonably designed. For example, such connection structure may allow the upper plate (or the holder 330 connected to the upper plate) to move or slide in the translation direction relative to the second adjustment bolt, while prevent the second adjustment bolt from rotating relative to the upper plate (or the holder 330 connected to the upper plate), thus, such connection structure may both allow the above translation movement, and allow the rotation of the second adjustment bolt to drive the upper plate to rotate.

The embodiments of the present disclosure further provide a method for adjusting an orientation of a ray source assembly of a radiation scan imaging apparatus by using the adjusting and positioning device described above. As shown in FIG. 5, a method for adjusting an orientation of a ray source assembly of a radiation scan imaging apparatus by using the adjusting and positioning device includes a translation adjustment step S1 and/or a rotation adjustment step S2. Exemplarily, in the translation adjustment step S1, the entire base 100 of the adjusting and positioning device is driven to move relative to the apparatus frame by the first adjustment mechanism 200, and the ray source assembly 10 is driven to translate in the above first direction, so as to adjust the position of the ray source assembly. In the rotation adjustment step S2, the second component is driven to move relative to the first component by the second adjustment mechanism 300, and the ray source assembly is driven to rotate within an angle range, so as to adjust a beam emitting direction of the ray source assembly. As described above, with such the adjusting and positioning device, an independent adjustment of the translation movement and the rotation movement of the ray source assembly may be realized. An order of the translation adjustment and the rotation adjustment of the ray source assembly may be reasonably designed or arranged as required. For example, the rotation adjustment step may be performed after the translation adjustment step is performed, and vice versa.

After the translation adjustment is performed to the ray source assembly, in step S3, it may be fixedly mounted to the apparatus frame relative to the apparatus frame (e.g., by means of a fastener), such that a position of the ray source assembly after the translation adjustment is fixed relative to the apparatus frame. Likewise, after the rotation adjustment is performed to the ray source assembly, in step 4, the second component may be fixed to the first component (e.g., by means of a fastener) to ensure that the second component is fixed relative to the apparatus frame, thereby ensuring that the beam emitting direction of the ray source assembly positioned on the second component is fixed relative to the apparatus frame.

In some embodiments, the translation adjustment step may include: driving the upper plate 110 and the lower plate 120 to move together relative to the apparatus frame by the first adjustment mechanism 200 to drive the ray source assembly 10 to translate in the first direction. For example, the first adjustment bolt 230 may be rotated relative to the first holder 210 to drive the first component (e.g., the lower plate 120) to translate, so as to drive the second component (e.g., the upper plate 110) connected with the first component and the ray source assembly 10 positioned on the second component to translate relative to the apparatus frame along the first direction.

In some examples, before the first component translates, the first fastener 107 may be released first, and then the first component (e.g., the lower plate 120) is driven by the first adjustment mechanism (e.g., by rotating the first adjustment bolt) to translate relative to the apparatus frame in a manner that the inner wall of the elongated first hole 127 abuts against the first fastener 107, and thus, such abutment may guide the translation movement of the first component.

In some embodiments, the rotation adjustment step may include driving the upper plate 110 to rotate relative to the lower plate 120 by the second adjustment mechanism 300 to drive the ray source assembly 10 to rotate. Exemplarily, in the rotation adjustment step, the upper plate and the ray source assembly may be driven to rotate around the shaft 121 provided on the lower plate by the second adjustment mechanism. For example, the second adjustment bolt 320 may be rotated relative to the second holder 310 to drive the second component (e.g., the upper plate 110) to rotate, so as to drive the ray source assembly 10 positioned on the second component to rotate. Exemplarily, a force may be applied to the second component in the direction tangent to the circumferential direction of the rotation of the second component by the rotation of the second adjustment bolt 320 relative to the second holder 310 to cause the rotation of the second component.

In some examples, before the second component rotates, the second fastener 103 may be released first to allow the second component to rotate in a manner that the inner wall of the elongated third hole 113 abuts against the second fastener 103 under the driving of the second adjustment mechanism 300. For example, the elongated third hole 113 extends in the direction tangent to the circumferential direction of the rotation of the second component, such that the abutment of the second fastener 103 against the inner wall of the elongated third hole 113 may guide the rotation of the second component.

Although the embodiments of the present disclosure are illustrated and described, it may be understood by those skilled in the art that modifications may be made to these embodiments within the scope of the present invention as defined by the appended claims.

## Claims

1. A device for adjusting and positioning, configured to adjust an orientation of a ray source assembly of a radiation scan imaging apparatus, wherein the radiation scan imaging apparatus has an apparatus frame, and the device for adjusting and positioning comprises:
a base (100) comprising a first component and a second component connected to each other, and is configured to support the ray source assembly (10), such that the ray source assembly is vertically positioned on the second component;
a first adjustment mechanism (200) mounted to the first component of the base, the first adjustment mechanism being configured for mounting to the apparatus frame and to drive the ray source assembly to translate in a first direction by driving the base to move relative to the apparatus frame, so as to adjust a position of the ray source assembly; and
a second adjustment mechanism (300) mounted to the second component of the base, the second adjustment mechanism being configured for mounting to the apparatus frame and to drive the ray source assembly to rotate within an angle range by driving the second component to move relative to the first component, so as to adjust a beam emitting direction of the ray source assembly,
**characterized in that**
a second hole (123) is provided on the first component; an elongated third hole (113) is provided on the second component, the elongated third hole penetrates the second component and extends in a direction at an angle to the first direction; the device for adjusting and positioning further comprises a second fastener (103) inserted into and passing through the third hole and engaged with the second hole so as to fasten the second component to the first component, and configured to be releasable during the rotation so as to allow the second component to rotate in a manner that an inner wall of the third hole abuts against the second fastener; and
wherein the elongated third hole extends in a direction tangent to a circumferential direction of the rotation of the second component.

2. The device for adjusting and positioning according to claim 1, wherein the base comprises an upper plate (110) as the second component and a lower plate (120) as the first component, the upper plate and the lower plate are stacked on each other in a vertical direction, such that the ray source assembly is positioned on an upper surface of the upper plate, and the upper plate and the lower plate are connected together in a manner that they are movable relative to each other.

3. The device for adjusting and positioning according to claim 2, wherein an upright shaft (121) is provided on an upper surface of the lower plate facing the upper plate, a through hole (111) is provided at a position of the upper plate corresponding to the shaft, the shaft passes through the through hole and extends upwardly so as to engage with a corresponding shaft hole of the ray source assembly, such that the ray source assembly and the upper plate are capable of rotating around the shaft under a driving of the second adjustment mechanism.

4. The device for adjusting and positioning according to claim 3, wherein the shaft is positioned such that an axis of the shaft substantially coincides with a vertical axis of the ray source assembly.

5. The device for adjusting and positioning according to claim 2, wherein a positioning pin (112) is provided on an upper surface of the upper plate facing away from the lower plate, the positioning is being engaged with a corresponding pin hole of the ray source assembly, so as to position the ray source assembly by preventing the ray source assembly from moving relative to the upper plate in a plane perpendicular to the vertical direction.

6. The device for adjusting and positioning according to any one of claims 1-5, wherein the first adjustment mechanism comprises:
a first holder (210) configured to be fixed to the apparatus frame; and
a first adjustment bolt (230) threadedly engaged with the first holder and connected to the first component, such that a rotation of the first adjustment bolt relative to the first holder drives the first component to translate, so as to drive the second component connected with the first component and the ray source assembly positioned on the second component to translate relative to the apparatus frame along the first direction.

7. The device for adjusting and positioning according to any one of claims 1-5, wherein
an elongated first hole (127) is provided on the first component, the elongated first hole penetrates the first component and extends in the first direction; and
the device for adjusting and positioning further comprises a first fastener (107) inserted into the first hole and tightened so as to mount the first component to the apparatus frame, and the first fastener is configured to be releasable during a translation movement so as to allow the first component to translate relative to the apparatus frame in a manner that an inner wall of the first hole abuts against the first fastener.

8. The device for adjusting and positioning according to any one of claims 1-5, wherein the device for adjusting and positioning further comprises a translation guide member (500) configured to be fixed to the apparatus frame and configured to guide the base to translate.

9. The device for adjusting and positioning according to any one of claims 1-5, wherein the second adjustment mechanism comprises:
a second holder (310) configured to be fixed to the apparatus frame; and
a second adjustment bolt (320) threadedly engaged with the second holder and connected to the second component, such that a rotation of the second adjustment bolt relative to the second holder drives the second component to rotate, so as to drive the ray source assembly positioned on the second component to rotate.

10. The device for adjusting and positioning according to claim 9, wherein the second adjustment bolt is arranged such that a rotation of the second adjustment bolt relative to the second seat applies to the second component a force tangent to a circumferential direction of the rotation of the second component.

11. The device for adjusting and positioning according to claim 6, wherein the first adjustment mechanism further comprises:
a third holder (220) fixed to the first component and connected with the first adjustment bolt.

12. The device for adjusting and positioning according to claim 9, wherein the second adjustment mechanism further comprises:
a fourth holder (330) fixed to the second component and connected with the second adjustment bolt.

13. A radiation scan imaging apparatus, comprising a ray source assembly and the device for adjusting and positioning according to any one of claims 1-12, wherein the ray source assembly is supported on the device for adjusting and positioning, such that an orientation of the ray source assembly is adjusted by the device for adjusting and positioning.

14. A method for adjusting an orientation of a ray source assembly of a radiation scan imaging apparatus by using the device for adjusting and positioning according to claim 1-12, comprising at least one of the following steps:
a translation adjustment step, comprising: driving an entire base to move relative to the apparatus frame through the first adjustment mechanism, thereby driving the ray source assembly to translate in the first direction, so as to adjust a position of the ray source assembly; and
a rotation adjustment step, comprising: driving the second component to move relative to the first component through the second adjustment mechanism, thereby driving the ray source assembly to rotate within an angle range, so as to adjust a beam emitting direction of the ray source assembly.

## Patentansprüche

1. Ein Gerät zum Einstellen und Positionieren, konfiguriert zum Einstellen einer Orientierung einer Strahlquellenbaugruppe einer Strahlungsabtastbildgebungsvorrichtung, wobei die Strahlungsabtastbildgebungsvorrichtung einen Vorrichtungsrahmen aufweist und das Gerät zum Einstellen und Positionieren umfasst:
eine Basis (100), die eine erste Komponente und eine zweite Komponente umfasst, die miteinander verbunden sind, und konfiguriert ist zum Tragen der Strahlquellenbaugruppe (10), sodass die Strahlquellenbaugruppe vertikal auf der zweiten Komponente positioniert ist;
einen ersten Einstellmechanismus (200), der an der ersten Komponente der Basis montiert ist, wobei der erste Einstellmechanismus zum Montieren an den Vorrichtungsrahmen konfiguriert ist und dazu dient, die Strahlquellenbaugruppe zu einer Translation in einer ersten Richtung anzutreiben, indem die Basis relativ zum Vorrichtungsrahmen bewegt wird, um so eine Position der Strahlquellenbaugruppe einzustellen; und
einen zweiten Einstellmechanismus (300), der an der zweiten Komponente der Basis montiert ist, wobei der zweite Einstellmechanismus zum Montieren an den Vorrichtungsrahmen konfiguriert ist und dazu dient, die Strahlquellenbaugruppe innerhalb eines Winkelbereichs zu rotieren, indem die zweite Komponente relativ zur ersten Komponente bewegt wird, um so eine Strahlemissionsrichtung der Strahlquellenbaugruppe einzustellen,
**dadurch gekennzeichnet, dass**
eine zweite Bohrung (123) an der ersten Komponente vorgesehen ist; eine längliche dritte Bohrung (113) an der zweiten Komponente vorgesehen ist, wobei die längliche dritte Bohrung die zweite Komponente durchdringt und sich in einer Richtung erstreckt, die zu der ersten Richtung einen Winkel bildet; das Gerät zum Einstellen und Positionieren ferner einen zweiten Befestiger (103) umfasst, der in die dritte Bohrung eingesetzt ist und diese durchquert und mit der zweiten Bohrung in Eingriff steht, um die zweite Komponente an der ersten Komponente zu befestigen, und der so konfiguriert ist, dass er während der Rotation lösbar ist, um der zweiten Komponente eine Rotation in der Weise zu ermöglichen, dass eine Innenwand der dritten Bohrung an dem zweiten Befestiger anliegt; und
wobei sich die längliche dritte Bohrung in einer Richtung erstreckt, die tangential zu einer Umfangsrichtung der Rotation der zweiten Komponente ist.

2. Das Gerät zum Einstellen und Positionieren nach Anspruch 1, wobei die Basis eine obere Platte (110) als die zweite Komponente und eine untere Platte (120) als die erste Komponente umfasst, wobei die obere Platte und die untere Platte in einer vertikalen Richtung aufeinander gestapelt sind, sodass die Strahlquellenbaugruppe auf einer oberen Oberfläche der oberen Platte positioniert ist, und wobei die obere Platte und die untere Platte in einer Weise miteinander verbunden sind, dass sie relativ zueinander beweglich sind.

3. Das Gerät zum Einstellen und Positionieren nach Anspruch 2, wobei eine aufrechte Welle (121) auf einer der oberen Platte zugewandten oberen Oberfläche der unteren Platte vorgesehen ist, eine Durchgangsbohrung (111) an einer Position der oberen Platte vorgesehen ist, die der Welle entspricht, wobei die Welle die Durchgangsbohrung durchquert und sich nach oben erstreckt, um mit einer entsprechenden Wellenbohrung der Strahlquellenbaugruppe in Eingriff zu stehen, sodass die Strahlquellenbaugruppe und die obere Platte unter einem Antrieb des zweiten Einstellmechanismus um die Welle rotierbar sind.

4. Das Gerät zum Einstellen und Positionieren nach Anspruch 3, wobei die Welle so positioniert ist, dass eine Achse der Welle im Wesentlichen mit einer vertikalen Achse der Strahlquellenbaugruppe zusammenfällt.

5. Das Gerät zum Einstellen und Positionieren nach Anspruch 2, wobei ein Positionierstift (112) auf einer von der unteren Platte abgewandten oberen Oberfläche der oberen Platte vorgesehen ist, wobei der Positionierstift mit einer entsprechenden Stiftbohrung der Strahlquellenbaugruppe in Eingriff steht, um die Strahlquellenbaugruppe zu positionieren, indem verhindert wird, dass sich die Strahlquellenbaugruppe relativ zur oberen Platte in einer zur vertikalen Richtung senkrechten Ebene bewegt.

6. Das Gerät zum Einstellen und Positionieren nach einem der Ansprüche 1 bis 5, wobei der erste Einstellmechanismus umfasst:
einen ersten Halter (210), der dazu konfiguriert ist, an dem Vorrichtungsrahmen befestigt zu werden; und
eine erste Einstellschraube (230), die mit dem ersten Halter gewindemäßig in Eingriff steht und mit der ersten Komponente verbunden ist, sodass eine Rotation der ersten Einstellschraube relativ zu dem ersten Halter die erste Komponente zu einer Translation antreibt, um so die mit der ersten Komponente verbundene zweite Komponente und die auf der zweiten Komponente positionierte Strahlquellenbaugruppe relativ zum Vorrichtungsrahmen entlang der ersten Richtung zu einer Translation anzutreiben.

7. Das Gerät zum Einstellen und Positionieren nach einem der Ansprüche 1 bis 5, wobei
eine längliche erste Bohrung (127) an der ersten Komponente vorgesehen ist, wobei die längliche erste Bohrung die erste Komponente durchdringt und sich in der ersten Richtung erstreckt; und
das Gerät zum Einstellen und Positionieren ferner einen ersten Befestiger (107) umfasst, der in die erste Bohrung eingesetzt ist und festgezogen ist, um die erste Komponente an dem Vorrichtungsrahmen zu montieren, wobei der erste Befestiger so konfiguriert ist, dass er während einer Translationsbewegung lösbar ist, um der ersten Komponente eine Translation relativ zum Vorrichtungsrahmen in der Weise zu ermöglichen, dass eine Innenwand der ersten Bohrung an dem ersten Befestiger anliegt.

8. Das Gerät zum Einstellen und Positionieren nach einem der Ansprüche 1 bis 5, wobei das Gerät zum Einstellen und Positionieren ferner ein Translationsführungsbauteil (500) umfasst, das dazu konfiguriert ist, an dem Vorrichtungsrahmen befestigt zu werden, und dazu konfiguriert ist, die Basis bei einer Translation zu führen.

9. Das Gerät zum Einstellen und Positionieren nach einem der Ansprüche 1 bis 5, wobei der zweite Einstellmechanismus umfasst:
einen zweiten Halter (310), der dazu konfiguriert ist, an dem Vorrichtungsrahmen befestigt zu werden; und
eine zweite Einstellschraube (320), die mit dem zweiten Halter gewindemäßig in Eingriff steht und mit der zweiten Komponente verbunden ist, sodass eine Rotation der zweiten Einstellschraube relativ zu dem zweiten Halter die zweite Komponente zu einer Rotation antreibt, um so die auf der zweiten Komponente positionierte Strahlquellenbaugruppe zu einer Rotation anzutreiben.

10. Das Gerät zum Einstellen und Positionieren nach Anspruch 9, wobei die zweite Einstellschraube so angeordnet ist, dass eine Rotation der zweiten Einstellschraube relativ zu dem zweiten Sitz auf die zweite Komponente eine Kraft ausübt, die tangential zu einer Umfangsrichtung der Rotation der zweiten Komponente ist.

11. Das Gerät zum Einstellen und Positionieren nach Anspruch 6, wobei der erste Einstellmechanismus ferner umfasst:
einen dritten Halter (220), der an der ersten Komponente befestigt ist und mit der ersten Einstellschraube verbunden ist.

12. Das Gerät zum Einstellen und Positionieren nach Anspruch 9, wobei der zweite Einstellmechanismus ferner umfasst:
einen vierten Halter (330), der an der zweiten Komponente befestigt ist und mit der zweiten Einstellschraube verbunden ist.

13. Eine Strahlungsabtastbildgebungsvorrichtung, die eine Strahlquellenbaugruppe und das Gerät zum Einstellen und Positionieren nach einem der Ansprüche 1 bis 12 umfasst, wobei die Strahlquellenbaugruppe auf dem Gerät zum Einstellen und Positionieren getragen ist, sodass eine Orientierung der Strahlquellenbaugruppe durch das Gerät zum Einstellen und Positionieren eingestellt wird.

14. Ein Verfahren zum Einstellen einer Orientierung einer Strahlquellenbaugruppe einer Strahlungsabtastbildgebungsvorrichtung unter Verwendung des Geräts zum Einstellen und Positionieren nach den Ansprüchen 1 bis 12, umfassend zumindest einen der folgenden Schritte:
einen Translationseinstellschritt, umfassend: Antreiben einer gesamten Basis zu einer Bewegung relativ zu dem Vorrichtungsrahmen durch den ersten Einstellmechanismus, wodurch die Strahlquellenbaugruppe zu einer Translation in der ersten Richtung angetrieben wird, um so eine Position der Strahlquellenbaugruppe einzustellen; und
einen Rotationseinstellschritt, umfassend: Antreiben der zweiten Komponente zu einer Bewegung relativ zur ersten Komponente durch den zweiten Einstellmechanismus, wodurch die Strahlquellenbaugruppe innerhalb eines Winkelbereichs zu einer Rotation angetrieben wird, um so eine Strahlemissionsrichtung der Strahlquellenbaugruppe einzustellen.

## Revendications

1. Dispositif de réglage et de positionnement, conçu pour régler l'orientation d'un ensemble source de rayons d'un appareil d'imagerie par balayage de rayonnement, dans lequel l'appareil d'imagerie par balayage de rayonnement comporte un cadre d'appareil, et le dispositif de réglage et de positionnement comprend:
une base (100) comprenant un premier composant et un deuxième composant reliés l'un à l'autre, et conçue pour supporter l'ensemble source de rayons (10), de telle sorte que l'ensemble source de rayons soit positionné verticalement sur le deuxième composant;
un premier mécanisme de réglage (200) monté sur le premier composant de la base et du cadre d'appareil, le premier mécanisme de réglage étant conçu pour monter le cadre d'appareil à amener l'ensemble source de rayons à se déplacer dans une première direction e amenant la base à se déplacer rapport au cadre d'appareil, de manière à régler la position de l'ensemble source de rayons; et
un deuxième mécanisme de réglage (300) monté sur le deuxième composant de la base et le cadre d'appareil, et le deuxième mécanisme de réglage étant conçu pour être monté sur le cadre d'appareil pour amener l'ensemble source de rayons à tourner dans une plage angulaire en amenant le deuxième composant à se déplacer par rapport au premier composant, de manière à régler une direction d'émission de faisceau de l'ensemble source de rayons,
**caractérisé en ce qu'**un deuxième trou (123) est pratiqué dans le premier composant ; un troisième trou allongé (113) est pratiqué dans le deuxième composant, le troisième trou allongé pénètre dans le deuxième composant et s'étend dans une direction formant un angle avec la première direction; le dispositif de réglage et de positionnement comprend en outre une deuxième fixation (103) insérée dans le troisième trou et le traversant, et emboîtée dans le deuxième trou de manière à fixer le deuxième composant au premier composant, et conçue pour être amovible pendant la rotation afin de permettre au deuxième composant de tourner de manière à ce qu'une paroi intérieure du troisième trou vienne en butée contre la deuxième fixation; et
dans lequel le troisième trou allongé s'étend dans une direction tangente à une direction circonférentielle de la rotation du deuxième composant.

2. Dispositif de réglage et de positionnement selon la revendication 1, dans lequel la base comprend une plaque supérieure (110) comme deuxième composant et une plaque inférieure (120) comme premier composant, la plaque supérieure et la plaque inférieure sont empilées l'une sur l'autre dans une direction verticale, de telle sorte que l'ensemble source de rayons soit positionné sur une surface supérieure de la plaque supérieure, et la plaque supérieure et la plaque inférieure sont reliées entre elles de manière à pouvoir se déplacer l'une par rapport à l'autre.

3. Dispositif de réglage et de positionnement selon la revendication 2, dans lequel une tige verticale (121) est disposée sur une surface supérieure de la plaque inférieure faisant face à la plaque supérieure, un trou traversant (111) est pratiqué dans une position de la plaque supérieure correspondant à la tige, la tige passe par le trou traversant et s'étend vers le haut de manière à s'introduire dans un trou de tige correspondant de l'ensemble source de rayons, de telle sorte que l'ensemble source de rayons et la plaque supérieure puissent tourner autour de la tige sous l'action du deuxième mécanisme de réglage.

4. Dispositif de réglage et de positionnement selon la revendication 3, dans lequel la tige est positionnée de telle sorte que son axe coïncide sensiblement avec l'axe vertical de l'ensemble source de rayons.

5. Dispositif de réglage et de positionnement selon la revendication 2, dans lequel une tige de positionnement (112) est disposée sur une surface supérieure de la plaque supérieure orientée à l'opposé de la plaque inférieure, le positionnement étant engagé avec un trou de tige correspondant de l'ensemble source de rayons, de manière à positionner l'ensemble source de rayons en empêchant celui-ci de se déplacer par rapport à la plaque supérieure dans un plan perpendiculaire à la direction verticale.

6. Dispositif de réglage et de positionnement selon l'une quelconque des revendications 1 à 5, dans lequel le premier mécanisme de réglage comprend:
un premier support (210) conçu pour se fixer au cadre d'appareil; et
un premier boulon de réglage (230) vissé dans le premier support et relié au premier composant, de telle sorte qu'une rotation du premier boulon de réglage par rapport au premier support amène le premier composant à se déplacer, afin d'amener le deuxième composant relié au premier composant et l'ensemble source de rayons positionné sur le deuxième composant à se déplacer par rapport au cadre d'appareil dans la première direction.

7. Dispositif de réglage et de positionnement selon l'une quelconque des revendications 1 à 5, dans lequel
un premier trou allongé (127) est pratiqué dans le premier composant, le premier trou allongé traverse le premier composant et s'étend dans la première direction; et
le dispositif de réglage et de positionnement comprend en outre une première fixation (107) insérée dans le premier trou et serrée de manière à monter le premier composant sur le cadre d'appareil, et la première fixation est conçue pour être amovible pendant un mouvement de translation afin de permettre au premier composant de se déplacer par rapport au châssis de l'appareil de manière à ce qu'une paroi intérieure du premier trou vienne en butée contre la première fixation.

8. Dispositif de réglage et de positionnement selon l'une quelconque des revendications 1 à 5, dans lequel le dispositif de réglage et de positionnement comprend en outre un élément de guidage de translation (500) conçu pour être fixé au cadre d'appareil et conçu pour guider la base afin qu'elle se déplace en translation.

9. Dispositif de réglage et de positionnement selon l'une quelconque des revendications 1 à 5, dans lequel le deuxième mécanisme de réglage comprend:
un deuxième support (310) conçu pour être fixé au cadre d'appareil; et
un deuxième boulon de réglage (320) vissé dans le deuxième support et relié au deuxième composant, de telle sorte qu'une rotation du deuxième boulon de réglage par rapport au deuxième support amène le deuxième composant à tourner, afin que l'ensemble source de rayons positionné sur le deuxième composant puisse tourner.

10. Dispositif de réglage et de positionnement selon la revendication 9, dans lequel le deuxième boulon de réglage est agencé de telle sorte que la rotation du deuxième boulon de réglage par rapport au deuxième siège applique au deuxième composant une force tangente à une direction circonférentielle de la rotation du deuxième composant.

11. Dispositif de réglage et de positionnement selon la revendication 6, dans lequel le premier mécanisme de réglage comprend en outre:
un troisième support (220) fixé au premier composant et relié au premier boulon de réglage.

12. Dispositif de réglage et de positionnement selon la revendication 9, dans lequel le deuxième mécanisme de réglage comprend en outre:
un quatrième support (330) fixé au deuxième composant et relié au deuxième boulon de réglage.

13. Appareil d'imagerie par balayage de rayonnement, comprenant un ensemble source de rayons et le dispositif de réglage et de positionnement selon l'une quelconque des revendications 1 à 12, dans lequel l'ensemble source de rayons est supporté sur le dispositif de réglage et de positionnement, de telle sorte que l'orientation de l'ensemble source de rayons est réglée par le dispositif de réglage et de positionnement.

14. Procédé de réglage de l'orientation d'un ensemble de source de rayons d'un appareil d'imagerie par balayage de rayonnement à l'aide du dispositif de réglage et de positionnement selon les revendications 1 à 12, comprenant au moins l'une des étapes suivantes:
une étape de réglage de translation, consistant à : amener toute la base à se déplacer par rapport au cadre d'appareil par l'intermédiaire du premier mécanisme de réglage, amenant ainsi l'ensemble source de rayons à se déplacer dans la première direction, de manière à régler la position de l'ensemble source de rayons; et
une étape de réglage de la rotation, consistant à : amener le deuxième composant à se déplacer par rapport au premier composant par l'intermédiaire du deuxième mécanisme de réglage, amenant ainsi l'ensemble source de rayons à tourner dans une plage angulaire, de manière à régler une direction d'émission de faisceau de l'ensemble source de rayons.
